**Europäisches Patentamt**

**European Patent Office**

**Office européen des brevets**

(11) Publication number: **0 108 536**
**B1**

(12) **EUROPEAN PATENT SPECIFICATION**

(45) Date of publication of patent specification: **12.09.90**

(21) Application number: **83306387.8**

(22) Date of filing: **20.10.83**

(51) Int. Cl.⁵: **C 23 F 11/08, C 09 D 5/08, C 09 D 5/04**

(54) Corrosion preventive composition.

(30) Priority: **28.10.82 GB 8230883**

(43) Date of publication of application:
**16.05.84 Bulletin 84/20**

(45) Publication of the grant of the patent:
**12.09.90 Bulletin 90/37**

(84) Designated Contracting States:
**DE FR IT NL SE**

(56) References cited:
FR-A-2 351 166    GB-A- 925 763
GB-A- 886 950    GB-A-1 088 259

Rheological Properties-Some general notes
A.Kaye, Institute of Science & Technology, The
University of Manchester, letter from 02.01.86
The greasing of aluminium based overhead
conductors W.B.R. Moore, Electricity Council,
Capenhurst Research Note ECRC/N 1790,
January 1984

The file contains technical information
submitted after the application was filed and
not included in this specification

(73) Proprietor: **Parkinson, Alan Richard**
**17, Rutherglen Drive**
**Bolton Lancashire, BC3 4PN (GB)**

(72) Inventor: **Parkinson, Alan Richard**
**17, Rutherglen Drive**
**Bolton Lancashire, BC3 4PN (GB)**

(74) Representative: **Funge, Harry et al**
**WILSON, GUNN & ELLIS 41-51 Royal Exchange**
**Cross Street**
**Manchester M2 7BD (GB)**

(56) References cited:

H.G. Muller, An introduction to Food Rheology ;
p. 59-60

Glasstone, Textbook of Physical Chemistry; p.
1263

NL Rheology Handbook; p. 3-7
Protective Coatings for Metals (3rd. Edition),
R.M. Burns, W.W. Bradley; p.671 American
Chemical Society Monograph Series, Reinhold
Publishing Corp., New York-Amsterdam-
London

Courier Press, Leamington Spa, England.

(56) References cited:

Manufacture and Application of Lubricating Greases; C.J. Boner, p. 110-112; Robert E. Krieger Publishing Co. Inc., Huntington, N.Y. 1971

Corrosion Inhibitors, I.L. Rozenfeld, USSR Acadamy of Sciences, McGraw Hill International Book Co.

Corrosion Inhibitors, G. Trabanelli, University of Ferrara, Ferrara, Italy

Organic Compounds as Corrosion Inhibitors in Different Environments-A Review; B. Sanyal; Prog. Org. Coatings 9(1981); p.165-236 Metallic Corrosion Inhibitors; Putilova et al., 1960, Pergamon Press, N.Y.

3M Technical Paper 98-0211-2411-4(76.05)P2 XY The Leader in Electrofluorination, 3M Industrial Chemical Products Div., St. Paul, Minnesota, USA

International Conference from 28-30.11.88 on overhead line design and construction: Theory and practice (up to 150 Kv); Conference Publication No. 297, p.93-97; The Institution of Electrical Engineers, Savoy Place, London, GB.

## Description

This invention relates to the protection of metal surfaces from corrosion.

It is often appropriate to protect metal surfaces from corrosion by means of paints, varnishes, lacquers, plastics and metal coatings or the like. These coatings are characterised by being essentially solid and in many cases, hard and inflexible. It is frequently desirable to protect metal surfaces by means of soft, flexible coatings which remain in this condition throughout the service life of the surface. It is an object of this invention to provide a solution to this problem.

U.K. Patent Specification No. 925763 describes an anticorrosion coating for metals which is prepared by mixing a fatty acid having a solidification point of at least 75°F (23.89°C) and zinc oxide in an amount sufficient to effect complete neutralisation of the free fatty acids in the fatty acid material. The mixture is heated to a temperature not exceeding 160°F (71.11°C) until neutralisation of the free fatty acids is completed and a liquid hydrocarbon vehicle is added to the mixture either before of after the heating.

The mixture is cooled and a thixotropic gel is formed. The gel can be applied to metal surfaces to prevent oxidation thereof.

French Patent Specification No. 2351166 discloses a corrosion inhibitor which consists of a mixture comprising a thixotropic, basic alkaline earth metal sulphonate analogous to a grease and a vaseline oxide, said vaseline oxide being present in an amount sufficient to enhance the corrosion inhibiting properties of the said alkaline earth metal sulphonate.

According to the present invention there is provided a method of prevention of corrosion including the steps of preparing a corrosion preventive composition comprising a corrosion inhibitor, said corrosion inhibitor being dissolved or dispersed in an oil or being itself a liquid, a thickening agent, said thickening agent being selected from finely divided silica, asbestos fibres, finely divided carbon such as carbon black, acetylene black or graphite, clays such as montmorillonite or attapulgite, organic pigments such as phthalocyanine, metallic complexes of organic pigments, finely divided inorganic compounds such as metal carbonates, oxides, hydroxides, silicates, lithium compounds such as lithium hydroxystearate or other inorganic carboxylates, said composition being highly pseudoplastic, thixotropic, and forming a gel upon standing, liquefying the composition, by application of shear, applying the liquefied composition to a metal and allowing the composition to form a gel, whereupon the gel exudes corrosion inhibitor therefrom due to syneresis.

In accordance with this invention the corrosion preventive composition may be conveniently applied to a surface for example by brushing, spraying, swabbing or flooding. Subsequent gelation or solidification provides a coating which remains in place and does not drip or flow from the surface. Drainage from the surface would result in uneconomical loss of the composition and in thinning of the coating with consequent reduction in the degree of protection of the surface.

The corrosion preventive composition is highly pseudoplastic; that is there is a substantial reduction in viscosity with increasing shear rate. The composition may, therefore, become mobile either when agitated prior to application to a surface or during application to a surface, for example by brushing or spraying etc.

The semi-solid nature of the gel serves to resist washing of the gel from the surface by rain or condensed moisture. Furthermore, atmospheric particulate matter such as dust, fibres, carbon particles, salt particles or aerosols cannot penetrate to the metal surface.

The corrosion inhibitor may comprise one or more compounds which may be organic, inorganic, naturally-occurring or synthetic. Preferred inhibitors include lanoline, lanoline esters, carboxylic acid esters of polyols including esters of glycerol, sorbitol and sorbitan, naphthenic acids and their metallic and amine salts, polybasic acids including "dimer" and "trimer" acids and their salts and esters, petroleum sulphonates and salts thereof including synthetic equivalents such as the "Nasul" series of compounds (R. T. Vanderbilt), sarkosine derivatives, amines, amides, heterocyclic nitrogen compounds and their derivatives including benzotriazole, tolyltriazole, substituted benzimidazoles, and oxidised petrolatums including those known as "Alox" (Alox Corporation, U.S.A.) "Hypax" (Carless Chemicals Ltd.) and "Crodax" (Croda Metal Treatments Ltd.). The nature and use of these and other inhibitors is described by J. I. Bergman, "Corrosion Inhibitors", Macmillan, 1963. Preferred inhibitors or blends of inhibitors are effective in preventing corrosion, soluble or dispersible in an oil or blend of oils, easy to manipulate, nontoxic and do not interact with each other in blends or with other ingredients of the composition so as to adversely affect the properties. Combinations of inhibitors may exhibit synergism in their properties.

Oils which may be used in the corrosion preventive composition include oils of mineral, vegetable or animal origin or derived from these by a variety of chemical processes. Oils prepared by chemical combinations of such precursors as alcohols, esters, carboxylic acids, phosphorus acids, organo-silicon compounds, glycols, fluorocarbons and the like, known broadly as synthetic oils, may also be used. Any oil may be used which is fluid or semi-solid, substantially insoluble in water and of low volatility under ambient conditions or other conditions of use.

The thickening agent used in the corrosion composition is selected from finely divided silica, asbestos fibres, finely divided carbon such as carbon black, acetylene black or graphite, clays such as montmorillonite or attapulgite, organic pigments such as phthalocyanine or metallic complexes thereof, finely divided inorganic compounds such as metal carbonates, oxides, hydroxides, silicates, lithium compounds such as lithium hydroxystearate or other inorganic carboxylates.

The thickening agent may be treated to cause it to exhibit hydrophobic properties. Thus thickening agents which are hydrophilic in nature such as silica, asbestos, clays or metal salts may be treated with additives such as silicones, highly fluorinated surface active agents, polyalkyl polychlorosilane, e.g. dimethyl dichloro silane, styrene or other polymerisable substances, moisture repellent polymers, cationic materials such as amines, amides and quaternary ammonium salts, fatty acids, mono and polyhydric alcohols and esters thereof. The additive may be used either to pretreat the thickening agent or may be added during mixture of the compositions. Use of agents which render the thickening agent hydrophobic serves to improve the resistance of the composition to moisture. A particular thickening agent or mixtures thereof may be selected to meet the requirements of the composition.

The compositions used in this invention exhibit reversible gel formation. Such compositions may be stored for prolonged periods in the gel form without loss of ability to revert to a fluid under shear during application to a surface. It is particularly preferred that the gel formation and breaking is repeatedly reversible without deterioration of the pseudoplastic, thixotropic or other properties.

The time that the composition takes to form or reform a gel may be important. In some cases it is preferred that gelation occurs instantly upon application of the composition to a surface. Thick coatings may be applied without drainage or loss. In alternative circumstances it may be preferred that the composition remains in a generally fluid condition for a prolonged period to facilitate flow and penetration of the composition into otherwise inaccessible locations.

Preferred thickening agents impart heat resistance to compositions in accordance with the invention by reducing melting or flow of the latter.

Compositions used in this invention may incorporate secondary thickening agents.

The latter may serve as partial replacements for the thickening agents, thereby reducing the cost of the composition.

Alternatively, the secondary thickening agents may supplement the primary thickening agents.

Preferred secondary thickening agents include alkaline alkaline earth, aluminium or other metallic soaps of: aliphatic acids, naphthenic acids, rosin, tall oil, oxidised petrolatums, alkyl and aralkyl sulphonic acids, mahogany acids, degras and the like.

The rheology of compositions used in the invention which include a thickening agent and a secondary thickening agent may be modified by addition of one or more polar additives. The polar additives may be present in an amount from a trace to 10% by weight of the composition. A preferred range is from 0.5% to 2.0% by weight. Suitable polar additives include water, mono and polyhydric alcohols, glycols including butyl glycol, polyglycols, polymers of ethylene and propylene oxides, dimethyl formamide, dimethyl sulphoxide, short chain polyalkylene oxides and amines.

The polar additives may function by cross-linking the mineral particles or fibres by hydrogen bonding. A wide range of compounds capable of forming hydrogen bonds may, therefore, be used as polar additives.

An important property of compositions used in this invention is syneresis. A composition may afford protection to inaccessible surfaces such as crevices between closely fitting components or other regions remote from the point of application of the composition by exudation or bleeding of the inhibitor from the body of the gel. The composition may by this means also serve to actively protect cracks or fissures from corrosion as they may form during weathering or flexure in use.

For the protection of moving surfaces especially from fretting corrosion, it is sometimes desirable that a corrosion preventive material used in this invention should possess lubricating properties either inherently or by means of the use of additives. The additives may be of the type which substantially dissolve in the medium, e.g. those usually termed extreme pressure additives or boundary lubricants, or solid lubricants such as graphite, molybdenum disulphide, polytetrafluoroethylene and the like. In the case of the solid lubricants it is important that the physical form of the medium shall prevent or reduce the tendency of the solid phase to settle or sediment out. It is especially beneficial if the solid phase can be maintained in suspension in the presence of large amounts of solvent or thinners since this can facilitate application by brushing, dipping, spraying etc., without the need for frequent agitation to maintain a uniform dispersion of the solid phase in the medium.

The composition used in the invention may include an antioxidant, for example the compound marketed by ICI Ltd., under the trade mark PERMANEX.

The composition used in the invention may also include an antifoaming agent to facilitate the addition of the thickening agent to the mixture. A convenient antifoaming agent is the silicone fluid oil M S 200 (Dow Corning Co.).

Corrosion preventive compositions used in this invention are especially useful where a low solvent or solvent free material is desired and where the product must be sufficiently mobile at the time of application to permit easy handling and simple spray, brush, smear, jet, dip, flooding or similar application while remaining substantially in place following deposition.

Solvent free or low solvent compositions are desirable for the protection of enclosed areas where solvent retention in the area can result in the "wash-off" of the corrosion preventive from surfaces due to continual evaporation and condensation of the trapped solvent. Examples of this kind of use include the box sections of vehicles, tubes, cavities formed by double skin structures such as those found in airframes and vehicle parts, cables and their coverings, enclosed mechanisms such as locks, motors, gearboxes,

4

EP 0 108 536 B1

pumps, electrical devices such as switches, servo mechanisms, measuring instruments, potentiometers and the like. The composition may be injected through apertures such as keyholes into enclosed mechanisms. The invention also finds use in treatment of welded joints due to the syneretic release of the inhibitor into cracks and other inaccessible areas. The composition could also be applied, for example, by an aerosol applicator as a lubricant for drilling. Use of the composition for internal protection of gears and other mechanisms such as chain drives is particularly advantageous since the pseudoplasticity of the composition reduces the power losses therein.

A low solvent or solvent free corrosion preventive composition is also useful where, following application to the surface to be protected, a subsequent shrinkage of the protective due to the evaporation of solvent is undesirable.

An example is the protection of cables and electrical and fibre optic conductors, especially the multi-stranded and normally helically wound conductors used in electrical power transmission and distribution. These are normally constructed of aluminium and, in some cases, reinforced by steel wires.

Since the conductors and their connectors are generally exposed permanently to external weathering conditions often in highly corrosive marine and industrial enviroments, it is necessary to apply a corrosion preventive both during manufacture and to conductors and connectors which have been erected.

Any diminution of the volume or shrinkage of the protective following application tends to leave voids in the interstitial spaces between the strands of the conductor. The voids allow the accumulation and retention of moisture within the conductor with the resultant increase in corrosion rate. Compositions for protection of conductors preferably have lubricating properties to minimise fretting corrosion.

Low solvent and solvent free compositions prepared in accordance with this invention have been found to be suitable for the protection of multi-stranded wire ropes, cables and conductors since they are easily applied, penetrate readily into the cable to protect the innermost strands and remain in place thereafter.

Also, importantly, since little or no solvent need be present, a negligible shrinkage occurs.

Thus according to a preferred aspect of the present invention a method of treatment of electrical cables comprises coating of the cables with a composition in accordance with this invention.

The treatment mf electrical cables may comprise pretreatment prior to installation or may comprise treatment of existing cables in situ, for example using a trolley moveable along the cable by means of pulleys.

The method of treatment has the advantage over conventional methods that the composition does not require heating to melt it before application.

The syneretic property of the composition is particularly advantageous in treatment of multicore cables.

Compositions in accordance with preferred aspects of the invention may be easily cleaned from surfaces, thus facilitating use for temporary protection of metal surfaces during storage, transportion or export.

The invention will now be further described by means of examples.

The compositions disclosed herein are described by weight.

Example 1

A corrosion preventive fluid was prepared by blending together a hydrofinished naphthenic oil having a density of 0.93 and a viscosity at 20°C of 150 centistokes (150 mPa · s), sorbitan mono-oleate, N-oleyl sarkosine and an antioxidant:

| Oil | 57 parts |
|---|---|
| Sorbitan mono-oleate | 35 parts |
| N-oleyl sarkosine | 7 parts |
| Antioxidant | 1 part |

The above fluid was thickened and processed to form a pseudoplastic/thixotropic gel by the slow addition of chrysotile asbestos fibres having a fibre length of approximately 5.0 microns and a length:diameter ratio of around 200. The chrysotile was added with vigorous agitation using a mechanical mixer until a fairly soft buttery consistency was imparted to the mixture. 6% based on the weight of corrosion preventive fluid was found to be sufficient. In practice the exact amount of chrysotile needed has been found to vary with the degree and time of agitation.

To illustrate some of the rheological properties of this product, a series of viscosity measurements was made at 20°C using a Brookfield viscometer fitted with a number 7 spindle. The results are set out in Table 1.

5

## TABLE 1

| Speed (rpm) | Viscosity (cST) (mPa · s) after (days) | | | |
| --- | --- | --- | --- | --- |
| | 0. | 4. | 11. | 15. |
| 5 | 204,000 | 178,000 | 200,000 | 180,000 |
| 20 | 70,000 | 59,500 | 68,000 | 64,500 |
| 80 | 33,600 | 30,800 | 33,200 | 31,600 |
| 100 | 20,200 | 18,600 | 20,400 | 19,400 |

The composition was a non-Newtonian, pseudoplastic material and the viscosity was highly shear dependent. Additionally, the composition was thixotropic and formed a stable gel instantly on cessation of agitation or shear. This combination of properties enabled the product to be easily manipulated and applied to metal surfaces in any desired thickness up to several centimetres without loss or drainage.

Measurements over several days clearly showed no major change or deterioration in rheological properties.

Example 2

A composition was prepared according to Example 1 in which one part of ethylene glycol was added to the corrosion preventive fluid prior to the thickening step with chrysotile.

Examples 3—10

Compositions were prepared according to Example 2 in which the ethylene glycol was replaced by diethylene glycol, triethylene glycol, propylene glycol, dipropylene glycol, ethylene glycol monobutyl ether, hexylene glycol, dimethyl formamide or dimethyl sulphoxide respectively.

Example 11

A composition was prepared according to Example 1 in which the gelling agent consisted essentially of finely divided silicon dioxide having an ultimate average particle size of 5—25 nm and a surface area of 100—300 $m^2g^{-1}$. The silicon dioxide was incorporated incrementally until the consistency of a heavy oil was attained. This required six parts of silicon dioxide based on 100 parts of the corrosion preventive fluid.

As in previous examples, the degree of thickening was found to be highly dependent on the degree of agitation and to a lesser extent on the time of agitation during and following the addition of the thickening agent. Thus the amount of thickening agent required to achieve a specific viscosity, degree of pseudoplasticity and thixotropy was dependent upon the shear rate and time.

In this example, the peripheral shear rate (using a Hobart planetary mixer of 20 litres capacity) was approximately 250 cm $sec^{-1}$ and mixing was continued at this rate for 20 minutes following the addition of the silicon dioxide.

Example 12

A composition was prepared according to Example 11 in which the finely divided silicon dioxide was pretreated with dichlorodimethylsilane to render the normally hydrophilic surface of the silicon dioxide partially hydrophobic.

This was accomplished by the reaction of freshly prepared silicon dioxide having an average primary particle size of 5—25 nm with steam and dichlorodimethyl silane simultaneously in such a way that a proportion of the silanol groups on the silicon dioxide surface reacted to form hydrophobic methyl bearing groups, (Aerosil R 972®, Degussa).

Example 13

Corrosion preventive fluid prepared according to Example 1 was thickened using a treated bentonite clay (Bentone 34®, NL Industries Inc. USA). A masterbatch was first prepared by mixing 85 parts of the corrosion preventive fluid with 15 parts of Bentone 34 in a triple roll paint mill.

To one hundred parts of the masterbatch, a further 200 parts of the corrosion preventive fluid was added followed by 5 parts of propylene carbonate. A mixture of semi-solid gel consistency resulted.

As in earlier examples, it was found that the processing conditions (milling time, degree of shear etc.) can greatly influence the rheological properties of the final product. It was often necessary therefore to adjust the amount of Bentone used to a level appropriate to the type of mill and the processing conditions. Generally 3—8% was sufficient using Bentone 34.

Examples 14—24

Compositions were prepared according to Example 13 in which the corrosion preventive fluid consisted of oil and corrosion inhibitors based on oxidised and processed petrolatums of unknown detailed structure and composition.

These are sold under various trade names such as 'Alox', 'Crodax' and 'Hypax'.

Thus compositions were prepared in which the corrosion prevention fluid contained 60 parts oil and 40 parts respectively of Alox 319F, Alox 2028 Alox 2162, Alox 2201, Alox 2213A, Alox 2263, Hypax 450, Hypax 450 A3, Hypax TP10, Hypax HM 102, Crodax 50, Crodax 100 and Crodax 235.

Examples 25—35

A series of compositions were prepared according to Examples 14—24 in which the gelling agent and method of preparation were in accordance with Example 12.

Example 36

A product was prepared according to Example 25, using 8 parts of the hydrophobic silicon dioxide (Aerosil R972, Degussa) per hundred parts of corrosion preventive fluid and Alox 2028 as the corrosion inhibitor and tested to show the advantage of this invention.

Using a Brookfield model LVT viscometer fitted with the number 4 spindle, viscosity measurements were made at several rotational speeds. The results are shown in Table 2.

TABLE 2

| Speed rpm | Viscosity CPS (mPa · s) | $\log_{10}$ (viscosity) |
|---|---|---|
| 12.0 | $47.5 \times 10^3$ | 4.68 |
| 6.0 | $77.0 \times 10^3$ | 4.87 |
| 3.0 | $140.0 \times 10^3$ | 5.15 |
| 1.5 | $256.0 \times 10^3$ | 5.41 |
| 0.6 | $580.0 \times 10^3$ | 5.76 |
| 0.3 | $1,080.0 \times 10^3$ | 6.03 |

The composition was found to have a pseudoplasticity index of 7.0—8.0, this being calculated as the (viscosity at $\times$ r.p.m.) $\div$ (viscosity at 10 $\times$ r.p.m.)

It was noted that on discontinuing the shear the viscosity recovered immediately to a higher value. The importance of this feature for certain applications has been discussed.

When allowed to stand the composition slowly formed a gel over a period of around three hours. The product thus became substantially immobile enabling a bulk of material or very thick films to remain in place on or within a metal structure after a degree of earlier mobility and allowed the preservative to flow into position.

The gelled material was agitated and allowed to regel 100 times and no change was observed in the physical properties. This is important for the storage and manipulation of the product in practice.

A metal panel was coated with the composition to a thickness of approximately 2 mm and allowed to stand for several hours. The coated panel was then heated in a vertical position for 100 hours at 100°C. Examination showed that the coating remained in place with no drainage or melting. On raising the temperature gradually to 200°C no change occurred apart from a slight darkening of the film. At temperatures higher than 200°C the preservative began to decompose with the evolution of gases. The physical and chemical stability of the product was limited only by the nature of the oil and inhibitors present and not by the gelling system.

A 2.0 cm diameter circle was scribed on the surface of a clean steel panel which had been prepared to Defence Standard 05—50/1, Method 25. 1.0 g of the composition was placed in the circle and worked so as to coat the circular area. The panel was allowed to stand at 20°C in a horizontal position for ten days after which it was placed horizontally in a closed vessel over an aqueous solution of 200 ppm (0.02%) sulphur dioxide so as to cause the unprotected metal surface to rapidly corrode. After five days the metal panel was examined and it was found that, in addition to protecting the area within the circle wherein the composition had been formally applied, effective protection had extended approximately a further 1.0 cm beyond the scribed circle to give an extra annular rust-free area. It was concluded that part of the inhibitor system had exuded from the bulk of the corrosion preventive and migrated along the metal surface by means of a

7

combination of syneresis and surface tension effects in such a way as to more than double the expected area of protection. In practice this important property enabled crevices and areas of difficult access to be protected from corrosion without the need to ensure complete coverage of the surfaces at the time of application.

The product was coated onto metal panels prepared to Defence Standard 05—50/1, Method 25, to film thickness of approximately 2.0 μm. This was achieved by dipping the panels in a 25% solution of the product in white spirit (BS 245) and allowing to drain and dry at 20°C.

i) Salt water:

To test the resistance afforded by the product to corrosion by the action of highly corrosive saline conditions, panels were partially immersed in 3% aqueous solution of sodium chloride.

ii) Sulphur dioxide:

The effect of exposure to aggressive industrial environments was simulated by exposure of coated panels to the vapours over a 0.02% aqueous solution of sulphur dioxide in a closed vessel.

iii) Acetic acid:

Woods, certain plastics, rubbers, paints, adhesives, paper and fabrics are known to release acetic and other volatile corrosive acids especially under conditions of high temperatures and humidity.

(*vide* Defence standard 03—13/issue 1, 1977)

This is of particular importance in the prevention of corrosion of machinery and metal parts which are stored or packaged with acid releasing materials in confined areas where the accumulation of aggressive vapours is possible e.g. export packaging. Accordingly, the efficacy of the product in protecting metals from acetic acid fumes was assessed by exposing coating panels to the vapours over a 1% aqueous solution of glacial acetic acid in a closed vessel.

The above corrosion tests were conducted on mild steel, aluminium, zinc, copper, brass, cadmium, tin and silver. (The zinc, cadmium and tin were in the form of plated steel).

The tests were carried out in triplicate at $20°\pm2°C$ and, for purposes of comparison, control experiments using similarly prepared but uncoated panels were run simultaneously.

The progress of the tests was followed by visual examination and judged to be complete when substantial discoloration or accumulation of corrosion products appeared on the surfaces of the untreated control specimens. For example, in the case of steel, the surface of the control was encrusted with the familiar red-brown rust or black oxides of iron; the aluminium control presented a grey or white powdery appearance; brass a dark brown or green coating and so on.

At this point, the coated panels were washed with clean water, rinsed with acetone and allowed to dry. The degree of corrosion was then assessed visually on a scale of 0—5; 0 represented a negligible protection from corrosion, with the test panels in a similar condition to those of the control, and 5 represented 100% protection with the panel surfaces substantially in the same condition as at the beginning of the test.

The results are presented in the Table 3.

### TABLE 3

|  | 3% NaCl | 0.01% $SO_2$ | 1.0% $CH_3CO_2H$ |
|---|---|---|---|
| Steel | 5 | 5 | 5 |
| Aluminium | 5 | 5 | 5 |
| Zinc | 4 | 4 | 3 |
| Copper | 5 | 4 | 4 |
| Brass | 5 | 5 | 4 |
| Cadmium | 4 | 5 | 5 |
| Tin | 5 | 5 | 5 |
| Silver | 4 | 5 | 5 |

150 mm lengths of multi-stranded ACSR (aluminium conductor steel reinforced) were degreased and exposed intermittently to a 0.1 M solution of NaCl. An a.c. potential of 2.0 volts was applied between two adjacent aluminium strands. The onset and rate of corrosion was followed and measured by observation of the d.c. voltage shift (with respect to a calomel electrode half cell) and the current flowing.

The degreased (and therefore unprotected) specimens began to corrode after an induction period of several hours and the rate of corrosion reached a maximum within 1—10 hours of corrosion starting. Samples examined visually at intervals showed increased amounts of corrosion as the test proceeded.

A number of the specimens were allowed to reach the maximum corrosion rate and, at this point, allowed to partially dry (20°C for 3 hours) and a product prepared in accordance with Example 36 was applied to the outer surface of the conductor. The test was then continued as before and the specimens exposed intermittently to the salt water. After 1—2 days the a.c. current and d.c. potentials resumed their inactive levels indicating a dramatic fall in the corrosion rate to the point where it virtually ceased.

The test was allowed to continue for a further five months and, in the case of the conductors treated with the product, no corrosion occurred even under these arduous conditions.

Similar tests with conventional greases gave no degree of protection.

The outstanding advantages gained by use of this invention are fourfold:

i) the product applied to the outer strands of the conductor was able to penetrate inwards.

ii) In so doing it was capable of displacing salt solution from the surface of the strands.

iii) On reaching the site of corrosion, the corrosion which was already underway was halted. This is especially noteworthy since it is known to be much more difficult to prevent corrosion which has already begun than to prevent its onset.

iv) The protection was 'permanent' within the parameters of the test and corrosion was prevented from restarting.

## Claims

1. A method of prevention of corrosion comprising the steps of preparing a corrosion preventive composition comprising a corrosion inhibitor, said corrosion inhibitor being dissolved or dispersed in an oil or being itself a liquid, a thickening agent, said thickening agent being selected from finely divided silica, asbestos fibres, finely divided carbon such as carbon black, acetylene black or graphite, clays such as montmorillonite or attapulgite, organic pigments such as phthalocyanine, metallic complexes of organic pigments, finely divided inorganic compounds such as metal carbonates, oxides, hydroxides, silicates, lithium compounds such as lithium hydroxystearate or other inorganic carboxylates, said composition being highly pseudoplastic, thixotropic and forming a gel upon standing, liquefying the composition, by application of shear, applying the liquefied composition to a metal and allowing the composition to form a gel, whereupon the gel exudes corrosion inhibitor therefrom due to synersis.

2. A method as claimed in Claim 1 characterised in that said thickening agent has been treated to cause it to exhibit hydrophobic properties.

3. A method as claimed in Claim 2, characterised in that the thickening agent has been treated with a compound selected from silicone, a highly fluorinated surface active agent, dichlorodimethyl silane or other alkylchloro silane, styrene or other polymerisable substances, a moisture repellant polymer, an amide, an amine, a quaternary ammonium salt or any other cationic compound, a fatty acid, a mono or polyhydric alcohol or ester thereof.

4. A method as claimed in any preceding claim, characterised in that said corrosion preventive composition comprises a secondary thickening agent comprising an alkaline, alkaline earth, aluminium or other metallic soap of an aliphatic acid, natphthenic acid, rosin, tall oil, oxidised petrolatum, alkyl or aralkyl sulphonic acid, mahogany acid or degras.

5. A method as claimed in any preceding claim, characterised in that said corrosion preventive composition comprises a polar additive selected from water, mono or polyhydric alcohol, butyl glycol or other glycol, polyglycol and dimethyl sulphoxide.

6. A method as claimed in Claim 5, characterised in that said polar additive constitutes a trace to 10% by weight of the composition.

7. A method as claimed in Claim 6, characterised in that said polar additive constitutes 0.5% to 2% by weight of the composition.

## Patentansprüche

1. Verfahren zur Verhinderung von Korrosion, das aus den Schritten besteht, daß man eine korrosionsverhindernde Zusammensetzung herstellt, die einen Korrosionsinhibitor, der in einem Öl gelöst oder dispergiert oder selbst eine Flüssigkeit ist, und ein Verdickungsmittel enthält, das ausgewählt ist aus fein zerkleinertem Siliciumdioxid, Asbestfasern, fein zerkleinertem Kohlenstoff wie z.B. Ruß, Acetylenruß oder Graphit, Tonen wie z.B. Montmorillonit oder Attapulgit, organischen Farbstoffen wie z.B. Phthalocyanin, Metallkomplexen organischer Farbstoffe, fein zerkleinerten anorganischen Verbindungen wie z.B. Metallcarbonaten, -oxiden, -hydroxiden, -silicaten, Lithiumverbindungen wie z.B. Lithiumhydroxystearat oder anderen anorganischen Carboxylaten, wobei die Zusammensetzung hoch pseudoplastisch, thixotrop und beim Stehen gelbildend ist, daß man die Zusammensetzung durch Einwirkung von Scherbeanspruchung verflüssigt, daß man die verflüssigte Zusammensetzung auf ein Metall aufträgt, und daß man die Zusammensetzung ein Gel bilden läßt, worauf aus dem Gel Korrosionsinhibitor auf Grund von Synärese austritt.

2. Verfahren nach Anspruch 1, dadurch gekennzeichnet, daß das Verdickungsmittel zur Erzielung hydrophober Eigenschaften behandelt worden ist.

3. Verfahren nach Anspruch 2, dadurch gekennzeichnet, daß das Verdickungsmittel mit einer Verbindung behandelt worden ist, die ausgewählt ist aus Siliconen, einem hochfluorierten oberflächenaktiven Mittel, Dichlordimethylsilan oder anderen Alkylchlorsilanen, Styrol oder anderen polymerisierbaren Verbindungen, einem feuchtigkeitsabstoßenden Polymer, einem Amid, einem Amin, einem quartären Ammoniumsalz oder einer anderen kationaktiven Verbindung, einer Fettsäure, und einem ein- oder mehrwertigen Alkohol oder Ester daraus.

4. Verfahren nach einem der vorangehenden Ansprüche, dadurch gekennzeichnet, daß die korrosionsverhindernde Zusammensetzung ein sekundäres Verdickungsmittel enthält, welches Alkali-, Erdalkali-, Aluminium- oder andere Metallseifen von aliphatischen Säuren, Naphthensäuren, Harz, Tallöl, oxidiertem Petrolatum, Alkyl- oder Aralkylsulfonsäure, Mahagonisäure oder Degras enthält.

5. Verfahren nach einem der verangehenden Ansprüche, dadurch gekennzeichnet, daß die korrosionsverhindernde Zusammensetzung ein polares Additiv enthält, ausgewählt aus Wasser, ein- oder mehrwertigem Alkohol, Butylglykol oder einem anderen Glykol, Polyglykol und Dimethylsulfoxid.

6. Verfahren nach Anspruch 5, dadurch gekennzeichnet, daß das polare Additiv von einer Spur bis zu 10 Gew.-% der Zusammensetzung ausmacht.

7. Verfahren nach Anspruch 6, dadurch gekennzeichnet, daß das polare Additiv 0,5 bis 2 Gew.-% der Zusammensetzung ausmacht.

**Revendications**

1. Procédé de prévention de la corrosion selon lequel on prépare une composition préventive de la corrosion comprenant un inhibiteur de corrosion, ledit inhibiteur de corrosion étant dissous ou dispersé dans une huile ou étant lui-même un liquide, un agent épaississant, ledit agent épaississant étant choisi parmi silice finement divisée, fibres d'amiante, charbon finement divisé, tel que noir de carbone, noir d'acétylène ou graphite, argiles, telles que montmorillonite ou attapulgite, pigments organiques tels que phtalocyanine, complexes métalliques de pigments organiques, composés inorganiques finement divisés, tels que carbonates, oxydes, hydroxydes, silicates de métal, composés de lithium, tels que hydroxystearate de lithium ou autres carboxylates inorganiques, ladite composition étant hautement pseudoplastique, thixotropique et formant un gel au repos, un liquéfie la composition, par application de cisaillement, on applique la composition liquéfiée à un métal et on laisse la composition former un gel, après quoi du gel exsude, par synérèse, un inhibiteur de corrosion.

2. Procédé selon la revendication 1, caractérisé par le fait que ledit agent épaississant a été traité pour lui faire présenter des propriétés hydrophobiques.

3. Procédé selon la revendication 2, caractérisé par le fait que l'agent épaississant a été traité avec un composé choisi parmi une silicone, un agent tensioactif fortement fluoré, dichlorométhylsilane ou autre alkylchlorosilane, styrène ou autres substances polymérisables, un polymère imperméable à l'humidité, un amide, une amine, ou sel d'ammonium quaternaire ou tout autre composé cationique, un acide gras, un mono ou polyalcool ou un ester de celui-ci.

4. Procédé selon l'une des revendications précédentes, caractérisé par le fait que ladite composition préventive de la corrosion comprend un agent épaississant secondaire comportant un alcalin, un alcalino-terreux, aluminium ou autre savon métallique d'un acide aliphatique, acide naphténique, colophrane, tallöl, pétrolatum oxydé, acide alkyl- ou aralkylsulfonique, acide ou degras de mahogany.

5. Procédé selon l'une des revendications précédentes, caractérisé par le fait que ladite composition préventive de la corrosion comprend un additif polaire choisi parmi l'eau, les mono ou polyalcools, le butylglycol ou autre glycol, polyglycol et diméthylsulfoxyde.

6. Procédé selon la revendication 5, caractérisé par le fait que ledit additif polaire représente entre une trace et 10% en poids de la composition.

7. Procédé selon la revendication 6, caractérisé par le fait que ledit additif polaire représente 0,5% à 2% en poids de la composition.